(19) Europäisches Patentamt / European Patent Office / Office européen des brevets

(11) **EP 3 604 933 B1**

(12) **EUROPEAN PATENT SPECIFICATION**

(45) Date of publication and mention
of the grant of the patent:
**08.03.2023 Bulletin 2023/10**

(21) Application number: **17901625.8**

(22) Date of filing: **23.03.2017**

(51) International Patent Classification (IPC):
**F24D 3/18** *(2006.01)*     **F24H 1/48** *(2006.01)*
**F24H 4/02** *(2006.01)*     **F24D 19/10** *(2006.01)*

(52) Cooperative Patent Classification (CPC):
**F24D 19/1012; F24D 19/1039; F24D 19/1048;**
**Y02B 30/70**

(86) International application number:
**PCT/JP2017/011833**

(87) International publication number:
**WO 2018/173218 (27.09.2018 Gazette 2018/39)**

(54) **HEAT MEDIUM CIRCULATION SYSTEM**

**SYSTEM FÜR HITZEMEDIUMZIRKULATION**

**SYSTÈME DE CIRCULATION DE FLUIDE CALOPORTEUR**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**05.02.2020 Bulletin 2020/06**

(73) Proprietor: **Mitsubishi Electric Corporation**
**Chiyoda-ku**
**Tokyo 100-8310 (JP)**

(72) Inventors:
• **MATSUMURA, Yasunari**
**Tokyo 100-8310 (JP)**

• **SHIBAZAKI, Naoki**
**Tokyo 100-8310 (JP)**

(74) Representative: **Witte, Weller & Partner**
**Patentanwälte mbB**
**Postfach 10 54 62**
**70047 Stuttgart (DE)**

(56) References cited:
**EP-A1- 2 492 602        EP-A2- 2 372 259**
**EP-A2- 2 770 398        WO-A1-2016/208088**
**WO-A1-2016/208088    JP-A- H08 210 700**
**JP-A- 2004 225 959     JP-A- 2016 114 294**

## Description

[Technical Field]

The present invention relates to a heat medium circulation system.

[Background Art]

A heat medium circulation system that supplies a heat medium heated by heating means to an indoor-heating terminal is widely used. In this system, when an indoor-heating load is low, the frequencies of start and stop of the heating means are increased. As a result, the life of the heating means may be shortened.

An indoor-heating device disclosed in PTL 1 shown below is configured in the following manner. When a heat pump is operated with a heating power higher than a minimum heating power, the temperature of the heat medium is controlled such that the temperature of the heat medium sent to the indoor-heating terminal is equal to a set temperature. When the heat pump is operated with the minimum heating power, the temperature of the heat medium is controlled such that the temperature of the heat medium sent to the indoor-heating terminal is equal to a corrected temperature obtained by adding a first predetermined temperature to the set temperature. With this, heat consumption increases, and hence the timing of stop of the heat pump is delayed, and the frequencies of start and stop of the heat pump are reduced.

PTL 2, according to its abstract, relates to a flow rate control that may achieve energy saving of a fluid circuit system. In a fluid circuit system including an outdoor unit used for heating or cooling a fluid, a hot water storage tank that utilizes the fluid heated or cooled using the outdoor unit 10, and air conditioners to, a control device detects a load being an amount of heat needed by the fluid circuit system, and controls a pump according to the detected load, thereby controlling a flow rate of water that circulates in a water circuit.

PTL 3, according to its abstract, relates to an apparatus to optimize the functioning of a boiler suitable to heat water for a user machine and having a delivery pipe, a return pipe. The apparatus comprises pumping means suitable to make the water circulate in the boiler, between the return pipe and the delivery pipe, at least a first temperature sensor to detect the temperature of the water in the delivery pipe, and also a second temperature sensor associated to the return pipe and adjustment means associated to the pumping means, to selectively vary the flow rate of the pumping means depending on the temperature detected by at least one of either the first temperature sensor or the second temperature sensor. This document discloses the features of the preamble of independent claim 1.

[Citation List]

[Patent Literature]

   [PTL 1] Japanese Patent Application Publication No. 2016-114294
   [PTL 2] EP 2 770 398 A2
   [PTL 3] EP 2 492 602 A1

[Summary of Invention]

[Technical Problem]

The device in PTL 1 sends the heat medium having a temperature higher than the original set temperature to the indoor-heating terminal when the heat pump is operated with the minimum heating power. As a result, the temperature of the heat medium supplied to the indoor-heating terminal may become higher than a temperature desired by a user, and comfortability may be impaired.

The present invention has been made in order to solve the above problem, and an object thereof is to provide a heat medium circulation system capable of reducing the frequencies of start and stop of heating means that heats a heat medium without making the temperature of the heat medium supplied to an indoor-heating terminal higher than necessary.

[Solution to Problem]

Therefore, there is provided a heat medium circulation system according to claim 1.

[Advantageous Effects of Invention]

According to the present invention, it becomes possible to reduce the frequencies of start and stop of the heating means that heats the heat medium without making the temperature of the heat medium supplied to the indoor-heating terminal higher than necessary.

[Brief Description of Drawings]

   Fig. 1 is a view showing a heat medium circulation system according to Embodiment 1.
   Fig. 2 is a flowchart showing a procedure executed by a controller in Embodiment 1.
   Fig. 3 is a flowchart showing a procedure executed by a controller in Embodiment 2.

[Description of Embodiments]

Hereinbelow, embodiments will be described with reference to the drawings. Common or corresponding elements in the drawings are designated by the same reference numerals, and the duplicate description thereof will be simplified or omitted.

Embodiment 1.

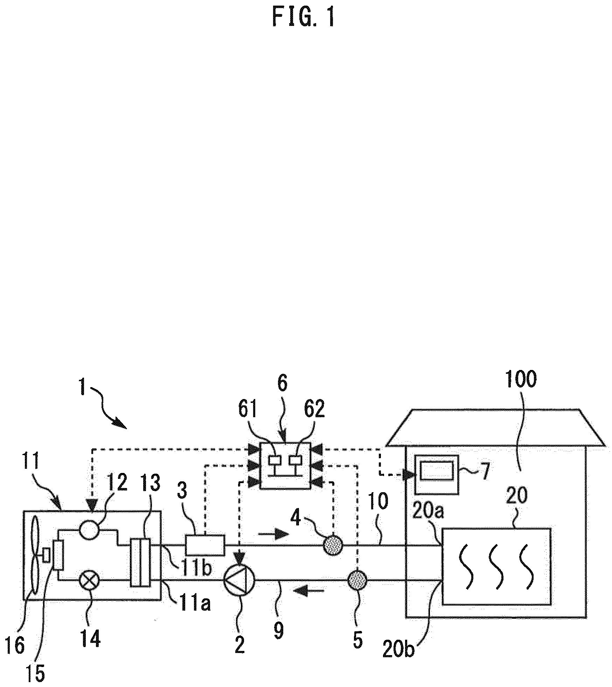

Fig. 1 is a view showing a heat medium circulation system 1 according to Embodiment 1. As shown in Fig. 1, the heat medium circulation system 1 according to Embodiment 1 includes a heat pump device 11 that heats a fluid heat medium. In the present invention, the heat medium may be water, or may also be a fluid heat medium other than water such as, e.g., a calcium chloride aqueous solution, an ethylene glycol aqueous solution, or alcohol.

The heat pump device 11 and an indoor-heating terminal 20 are connected to each other via a first passage 9 and a second passage 10 through which the heat medium flows. A circulation circuit in which the heat medium circulates is formed by the first passage 9, the second passage 10, the heat pump device 11, and the indoor-heating terminal 20. In the present embodiment, the heat pump device 11 is disposed outdoors.

The indoor-heating terminal 20 is installed in a room 100. The indoor-heating terminal 20 includes at least one indoor-heating appliance that heats the room 100 by dissipating heat of the heat medium. The indoor-heating appliance may be any of, e.g., a floor heating panel that is installed under a floor, a radiator or a panel heater that is installed on an indoor wall surface, and a fan convector. In the case where the indoor-heating terminal 20 includes a plurality of the indoor-heating appliances, the types of the indoor-heating appliances may be identical to or different from each other. In the case where the indoor-heating terminal 20 has a plurality of the indoor-heating appliances, a method of connecting the indoor-heating appliances may be any of series connection, parallel connection, and a combination of the series connection and the parallel connection.

The heat pump device 11 has an inlet 11a and an outlet 11b. The indoor-heating terminal 20 has an inlet 20a and an outlet 20b. The inlet 11a of the heat pump device 11 communicates with the outlet 20b of the indoor-heating terminal 20 via the first passage 9. The outlet 11b of the heat pump device 11 communicates with the inlet 20a of the indoor-heating terminal 20 via the second passage 10.

A pump 2 is connected to some midpoint of the first passage 9. When the pump 2 is operated, the heat medium circulates in the circulation circuit that passes through the first passage 9, the second passage 10, the heat pump device 11, and the indoor-heating terminal 20. A flow rate sensor 3 detects the volume flow rate of the heat medium. In an example shown in the drawing, the flow rate sensor 3 is installed in the second passage 10. An outlet temperature sensor 4 is installed in the second passage 10. The outlet temperature sensor 4 detects the temperature of the heat medium flowing out from the outlet 11b of the heat pump device 11 (hereinafter referred to as an "outlet temperature"). A return temperature sensor 5 is installed in the first passage 9. The return temperature sensor 5 detects the temperature of the heat medium returning to the inlet 11a of the heat pump device 11 through the indoor-heating terminal 20 (hereinafter referred to as a "return temperature").

The heat pump device 11 includes a refrigerant circuit in which a compressor 12, a first heat exchanger 13, a decompression device 14, and a second heat exchanger 15 are annularly connected by refrigerant piping. A refrigerant sealed in the refrigerant circuit may be any of, e.g., carbon dioxide, ammonia, propane, isobutane, chlorofluorocarbons such as HFC and the like, HFO-1123, and HFO-1234yf. The heat pump device 11 performs an operation of a heat pump cycle using the refrigerant circuit. In the first heat exchanger 13, heat is exchanged between a refrigerant having high temperature and high pressure compressed by the compressor 12 and the heat medium flowing in from the first passage 9. The decompression device 14 expands the high-pressure refrigerant having passed through the first heat exchanger 13 to turn the high-pressure refrigerant into a low-pressure refrigerant. The decompression device 14 may be, e.g., an expansion valve capable of varying an opening or may also be a capillary tube. The second heat exchanger 15 evaporates the low-pressure refrigerant by causing the low-pressure refrigerant to absorb heat of a fluid. In the present embodiment, the fluid is outside air. The heat pump device 11 of the present embodiment includes a blower 16 that supplies the outside air to the second heat exchanger 15. Instead of this configuration, it is also possible to use, e.g., groundwater, wastewater, or solar-heated water as the fluid that exchanges heat with the low-pressure refrigerant in the second heat exchanger 15.

The heat medium circulation system 1 includes a controller 6 and a terminal device 7. The heat pump device 11, the pump 2, the flow rate sensor 3, the outlet temperature sensor 4, and the return temperature sensor 5 are electrically connected to the controller 6. The controller 6 controls the operation of the heat medium circulation system 1.

The controller 6 and the terminal device 7 are connected to each other so as to be capable of bidirectional data communication by using wired or wireless communication. The terminal device 7 may be installed in the room 100. The terminal device 7 has the function of receiving operations of a user related to an operation command, change of a set value, and others. The terminal device 7 is an example of an operation terminal or a user interface. The terminal device 7 may be equipped with a display section that displays information on the state of the heat medium circulation system 1 or the like, an operation section operated by the user such as a switch or the like, a speaker, and a microphone, though the depiction thereof is omitted. The heat medium circulation system 1 may include a plurality of the terminal devices 7 that are installed at different places.

The heat medium circulation system 1 can execute an indoor-heating operation. The indoor-heating operation is the operation that supplies the heat medium heated by the heat pump device 11 to the indoor-heating terminal 20. In the indoor-heating operation, the heat pump device 11 and the pump 2 are operated.

The controller 6 can adjust the heating power of the heat pump device 11. The heating power of the heat pump device 11 is an amount of heat given to the heat medium by the heat pump device 11 per unit time. The unit of the heating power of the heat pump device 11 is, e.g., a "watt". The controller 6 can adjust the heating power of the heat pump device 11 by changing the operating frequency of the compressor 12 of the heat pump device 11 using inverter control. The minimum heating power of the heat pump device 11 corresponds to the heating power of the heat pump device 11 when the operating frequency of the compressor 12 is the minimum frequency.

Hereinafter, the volume flow rate of the heat medium passing through the heat pump device 11 is referred to as a "circulation flow rate". The controller 6 can adjust the circulation flow rate. In the present embodiment, the controller 6 can adjust the circulation flow rate by adjusting the rotational speed of the pump 2. The pump 2 may include a pulse width modulation control DC motor that can change the rotational speed with a speed command voltage from the controller 6. In the present embodiment, the circulation flow rate can be detected by the flow rate sensor 3.

The heat medium circulation system 1 may include means that detects the indoor temperature of the room 100 in which the indoor-heating terminal 20 is installed. For example, the terminal device 7 installed in the room 100 may include an indoor temperature sensor. In the following description, the detected actual indoor temperature of the room 100 is referred to as an "actual indoor temperature". In addition, the target value of the indoor temperature of the room 100 is referred to as a "target indoor temperature". The user may set the target indoor temperature by operating the terminal device 7. The controller 6 can receive information on the actual indoor temperature and the target indoor temperature from the terminal device 7.

In the indoor-heating operation, the controller 6 can control the operation of the pump 2 such that the circulation flow rate detected by the flow rate sensor 3 is equal to a target circulation flow rate. The user may be allowed to set the value of the target circulation flow rate by operating the terminal device 7. As an example, it is assumed that the user can select one of the target circulation flow rates that have 6 different levels including flow rate levels 1 to 6 in the terminal device 7. In this case, for example, when the flow rate level 1 is selected, the target circulation flow rate may be set to satisfy the target circulation flow rate = 3 L / min. When the flow rate level 2 is selected, the target circulation flow rate may be set to 4 L / min by increasing the target circulation flow rate at the flow rate level 1 by 1 L / min. Similarly, when the flow rate level 6 is selected, the target circulation flow rate may be set to satisfy the target circulation flow rate = 8 L / min. Alternatively, the user may input the specific numerical value of the target circulation flow rate into the terminal device 7. Alternatively, the controller 6 may set the value of the target circulation flow rate according to, e.g., a difference between the target indoor temperature and the actual indoor temperature. In the present embodiment, the "target circulation flow rate" corresponds to a "first flow rate".

In the following description, there are cases where the target value of the outlet temperature is referred to as a "target outlet temperature". In addition, there are cases where the outlet temperature detected by the outlet temperature sensor 4 is referred to as an "actual outlet temperature". In the indoor-heating operation, the controller 6 can control the operation of the heat pump device 11 such that the actual outlet temperature is equal to the target outlet temperature. For example, when the actual outlet temperature is higher than the target outlet temperature, the controller 6 controls the operation of the heat pump device 11 such that the heating power is reduced. When the actual outlet temperature is lower than the target outlet temperature, the controller 6 controls the operation of the heat pump device 11 such that the heating power is increased.

The user may be allowed to set the value of the target outlet temperature by operating the terminal device 7. Alternatively, the controller 6 may set the value of the target outlet temperature according to, e.g., the difference between the target indoor temperature and the actual indoor temperature. When the actual outlet temperature becomes higher than the target outlet temperature, the heat medium having a temperature higher than the target outlet temperature desired by the user is sent to the indoor-heating terminal 20. As a result, the temperature of the heat medium flowing in the indoor-heating terminal 20 may become higher than the temperature desired by the user, and comfortability may be impaired. According to the present embodiment, the controller 6 controls the operation of the heat pump device 11 such that the actual outlet temperature is equal to the target outlet temperature, and the heat medium having a temperature higher than the temperature desired by the user can be thereby prevented from being supplied to the indoor-heating terminal 20.

The heat medium circulation system 1 includes load detection means that detects an indoor-heating load when the indoor-heating operation is performed. The indoor-heating load is an amount of heat dissipated from the indoor-heating terminal 20 per unit time. The unit of the indoor-heating load is, e.g., a "watt". In the present embodiment, the indoor-heating load can be detected by using the flow rate sensor 3, the outlet temperature sensor 4, and the return temperature sensor 5. For example, when the indoor-heating load is HL, the volume flow rate of the heat medium detected by the flow rate sensor 3 is V, the temperature of the heat medium detected by the outlet temperature sensor 4 is T1, and the temperature of the heat medium detected by the return temperature sensor 5 is T2, the indoor-heating load HL can be calculated by using the following formula.

$$HL = V \times (T1 - T2) \times \alpha$$

wherein $\alpha$ is a constant determined according to the specific heat and the density of the heat medium.

In the indoor-heating operation, when a state in which the indoor-heating load is lower than the heating power of the heat pump device 11 continues, the actual outlet temperature is increased. When the actual outlet temperature becomes higher than the target outlet temperature, the controller 6 controls the operation of the heat pump device 11 such that the heating power is reduced. However, as described above, the heating power of the heat pump device 11 cannot be adjusted to a value lower than the minimum heating power.

When a state in which the heat pump device 11 is operated with the minimum heating power and the indoor-heating load is lower than the minimum heating power of the heat pump device 11 continues, the actual outlet temperature is increased. In this case, even when the actual outlet temperature becomes higher than the target outlet temperature, the heating power of the heat pump device 11 cannot be further reduced. In this case, when the actual outlet temperature becomes higher than the target outlet temperature to exceed an allowable range, the controller 6 stops the heat pump device 11. With this, the heat medium having a temperature higher than the temperature desired by the user can be prevented from being supplied to the indoor-heating terminal 20. After the heat pump device 11 is stopped in this manner, the controller 6 restarts the heat pump device 11 in response to a reduction in actual indoor temperature or a reduction in actual outlet temperature. When the indoor-heating load is lower than the minimum heating power of the heat pump device 11, the frequencies of start and stop of the heat pump device 11 may be increased by repetition of the above operation. When the frequencies of start and stop of the heat pump device 11 are high, the life of the heat pump device 11, particularly the life of the compressor 12 may be shortened by an increase in the number of starts and stops of the compressor 12.

In the following description, the indoor-heating load balanced with the minimum heating power of the heat pump device 11 is referred to as a "minimum load". The unit of the minimum load is, e.g., a "watt". The controller 6 stores the value of the minimum load. When the actual outlet temperature has a substantially constant value in the indoor-heating operation in which the heat pump device 11 is operated with the minimum heating power, the indoor-heating load at this point is probably balanced with the minimum heating power of the heat pump device 11. The value of the minimum load stored by the controller 6 may be, e.g., a value equal to the minimum heating power of the heat pump device 11. A certain amount of heat is dissipated from the heat medium passing through the first passage 9 and the second passage 10 to a surrounding area. In the case where such dissipation of heat occurs, even when the indoor-heating load is slightly lower than the minimum heating power of the heat pump device 11, the actual outlet temperature probably has a substantially constant value. From this viewpoint, the value of the minimum load stored by the controller 6 may be a value slightly lower than the minimum heating power of the heat pump device 11.

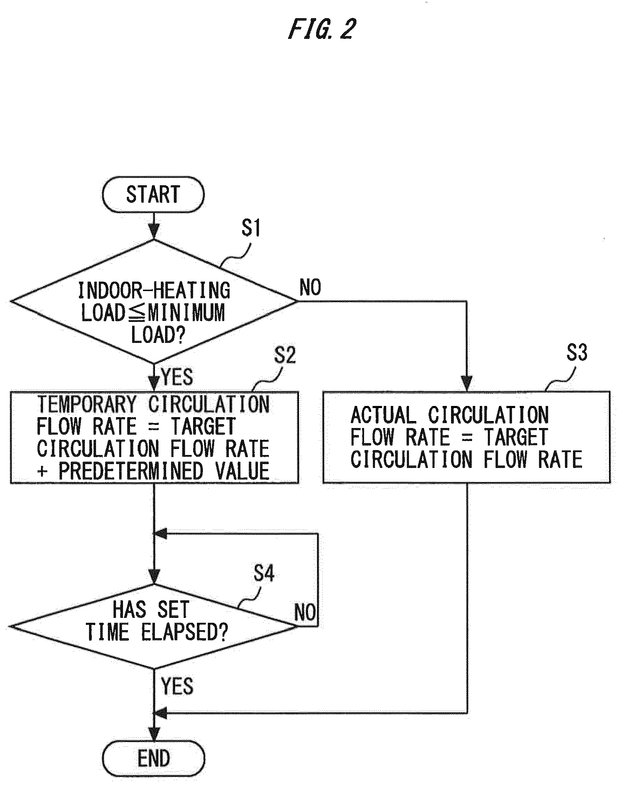

Fig. 2 is a flowchart showing a procedure executed by the controller 6 in Embodiment 1. During execution of the indoor-heating operation, the controller 6 periodically executes the procedure in the present flowchart repeatedly. Hereinafter, with reference to Fig. 2, a description will be given of an example of the procedure executed by the controller 6 in the indoor-heating operation.

The target circulation flow rate and the target outlet temperature in the indoor-heating operation are set in the above manner. Hereinafter, the circulation flow rate detected by the flow rate sensor 3 is referred to as an "actual circulation flow rate". When the indoor-heating operation is started, the controller 6 controls the operation of the pump 2 such that the actual circulation flow rate detected by the flow rate sensor 3 is equal to the target circulation flow rate, and adjusts the heating power of the heat pump device 11 such that the actual outlet temperature detected by the outlet temperature sensor 4 is equal to the target outlet temperature. Thereafter, the controller 6 executes a process in Step S1 in Fig. 2.

In Step S1 in Fig. 2, the controller 6 detects the indoor-heating load by using the flow rate sensor 3, the outlet temperature sensor 4, and the return temperature sensor 5. Hereinafter, the detected indoor-heating load is referred to as an "actual indoor-heating load". In Step S1, the controller 6 determines whether or not the actual indoor-heating load is lower than the pre-stored minimum load. In the case where the value of the actual indoor-heating load is larger than the value of the minimum load, that corresponds to the case where the actual indoor-heating load is not lower than the minimum load. In this case, the procedure proceeds to Step S3 from Step S1. In Step S3, the controller 6 controls the operation of the pump 2 such that the actual circulation flow rate detected by the flow rate sensor 3 is equal to the target circulation flow rate. In the case where the actual indoor-heating load is not lower than the minimum load, the actual outlet temperature can be made equal to the target outlet temperature by making the actual circulation flow rate equal to the target circulation flow rate and adjusting the heating power of the heat pump device 11. After Step S3, the current procedure is ended.

In contrast to this, in the case where the value of the actual indoor-heating load is not larger than the value of the minimum load, that corresponds to the case where the actual indoor-heating load is lower than the minimum load. In this case, the procedure proceeds to Step S2 from Step S1. In Step S2, the controller 6 controls the operation of the pump 2 such that the actual circulation flow rate detected by the flow rate sensor 3 is higher than the target circulation flow rate. In Step S2, the controller 6 calculates a "temporary circulation flow rate". The value of the temporary circulation flow rate is larger than the value of the target circulation flow rate. For example, the value of the temporary circulation flow rate is a value obtained by adding a predetermined value to the target circulation flow rate. In Step S2, the controller 6 controls the operation of the pump 2 such that the actual circulation flow rate detected by the flow rate sensor 3 is equal to the temporary circulation flow rate.

As described above, in the present embodiment, in the case where the actual indoor-heating load detected when the actual circulation flow rate is equal to the target circulation flow rate is lower than the minimum load, the controller 6 adjusts the actual circulation flow rate such that the actual circulation flow rate is higher than the target circulation flow rate. With this, effects described below are obtained. When the heating power of the heat pump device 11 is HP, the actual circulation flow rate is V, the temperature of the heat medium flowing into the inlet 11a of the heat pump device 11 is Tin, the temperature of the heat medium flowing out from the outlet 11b of the heat pump device 11 is Tout, and a temperature increase of the heat medium during a period in which the heat medium passes through the heat pump device 11 is $\Delta$T, the following formula is satisfied.

$$\Delta T = Tout - Tin = HP \div V \times \beta$$

wherein $\beta$ is a constant determined according to the specific heat and the density of the heat medium.

As indicated by the above formula, even when the heating power of the heat pump device 11 is unchanged, as the actual circulation flow rate V becomes higher, the temperature increase $\Delta$T of the heat medium becomes smaller. Therefore, as the actual circulation flow rate V becomes higher, the actual outlet temperature detected by the outlet temperature sensor 4 becomes lower. According to the present embodiment, in the case where the actual indoor-heating load is lower than the minimum load, it is possible to prevent an excessive increase in actual outlet temperature by adjusting the actual circulation flow rate such that the actual circulation flow rate is higher than the target circulation flow rate. As a result, the actual outlet temperature can be prevented from becoming higher than the target outlet temperature to exceed the allowable range, and hence the heat pump device 11 can be prevented from being stopped by the controller 6. In this manner, in the case where the actual indoor-heating load is lower than the minimum load, it is possible to prevent the frequencies of start and stop of the heat pump device 11 from being increased, and hence it is possible to prevent the life of the heat pump device 11 from being shortened.

In Step S2 in Fig. 2, the controller 6 may notify the user that the actual circulation flow rate is higher than the target circulation flow rate. With this, convenience is improved. With regard to a method for the notification, for example, the information may be displayed in a display section of the terminal device 7, or the information may be provided by using voice guidance from the terminal device 7.

The procedure proceeds to Step S4 from Step S2. In Step S4, the controller 6 determines whether or not a predetermined set time has elapsed from when the actual circulation flow rate becomes higher than the target circulation flow rate. The value of the set time may be a value in a range of, e.g., 1 hour to 3 hours. When the set time has elapsed from when the actual circulation flow rate becomes higher than the target circulation flow rate, after Step S4, the current procedure is ended. When the current procedure is ended after Step S4, the controller 6 controls the operation of the pump 2 such that the actual circulation flow rate is equal to the target circulation flow rate. Thus, in the present embodiment, after the set time has elapsed from when the actual circulation flow rate becomes higher than the target circulation flow rate, the controller 6 adjusts the actual circulation flow rate such that the actual circulation flow rate is caused to return to the target circulation flow rate. With this, it is possible to prevent a state in which the actual circulation flow rate is higher than the target circulation flow rate from continuing for a long time.

In the case where the procedure has proceeded to Step S2 from Step S1, when the actual indoor temperature is not less than the target indoor temperature, the controller 6 may stop the operation of the heat pump device 11 instead of performing the above procedure in which the actual circulation flow rate is made higher than the target circulation flow rate. With this, it is possible to prevent the indoor temperature from becoming higher than necessary, and hence comfortability can be improved.

The heat medium circulation system 1 may include means that makes the value of the minimum load stored in the controller 6 variable. For example, the heat medium circulation system 1 may be configured such that the value of the minimum load stored in the controller 6 can be changed by operation of the terminal device 7 by the user or the like. For example, the value of the minimum load can be set to a more appropriate value by changing the value of the minimum load according to installation conditions such as the lengths of the first passage 9 and the second passage 10 and the like.

The heat medium circulation system 1 may include means that makes the "predetermined value" used in the calculation of the temporary circulation flow rate in Step S2 described above variable. For example, the heat medium circulation system 1 may be configured such that the value of the "predetermined value" stored in the controller 6 can be changed by the operation of the terminal device 7 by the user or the like. For example, the value of the temporary circulation flow rate can be controlled to a more appropriate value by changing the value of the "predetermined value" according to installation conditions such as the lengths of the first passage 9 and the second passage 10 and the like.

The heat medium circulation system 1 may include means that allows the user to make the value of the "set time" in Step S4 described above variable. For example, the heat medium circulation system 1 may be configured such that the value of the "set time" stored in the controller 6 can be changed by the operation of the terminal device 7 by the user. With this, convenience is improved.

The individual functions of the controller 6 may be implemented by processing circuitry. The processing circuitry of the controller 6 may include at least one processor 61 and at least one memory 62. In the case where the processing circuitry includes at least one processor 61 and at least one memory 62, the individual functions of the controller 6 may be implemented by software, firmware, or a combination of software and firmware. At least one of the software and the firmware may be described as a program. At least one of the software and the firmware may be stored in at least one memory 62. At least one processor 61 may implement the individual functions of the controller 6 by reading and executing a program stored in at least one memory 62. At least one memory 62 may include a non-volatile or volatile semiconductor memory, a magnetic disk, or the like.

The configuration is not limited to the configuration in which the operation of the heat medium circulation system 1 is controlled by the single controller, and a configuration may also be adopted in which a plurality of the controllers cooperate with each other to control the operation of the heat medium circulation system 1.

Embodiment 2.

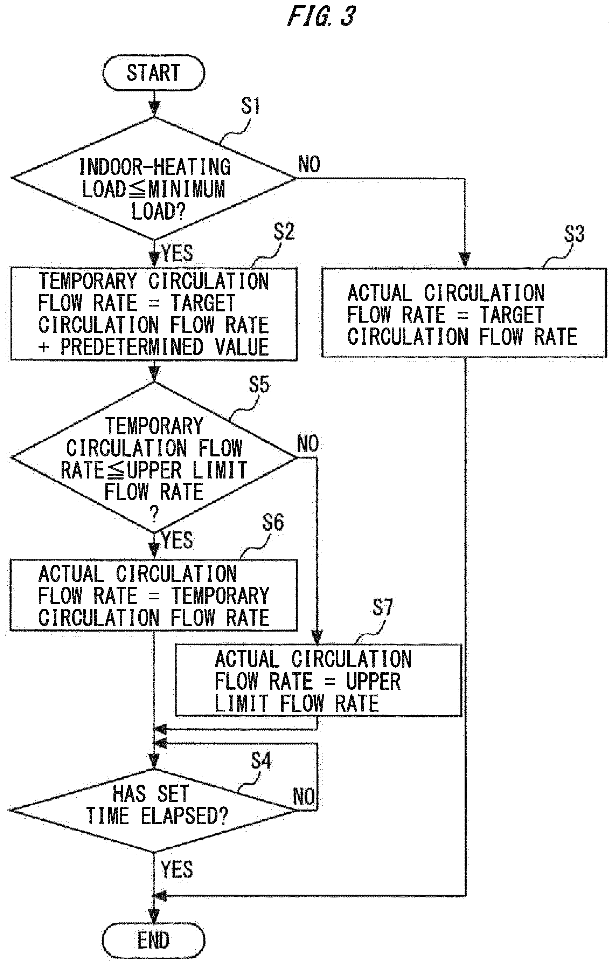

Next, with reference to Fig. 3, Embodiment 2 will be described. Points different from those in Embodiment 1 described above will be mainly described, and the description of portions identical or corresponding to those in Embodiment 1 will be simplified or omitted. The hardware configuration of the heat medium circulation system 1 of the present Embodiment 2 is the same as that of Embodiment 1 shown in Fig. 1, and hence the description thereof will be omitted.

In the present Embodiment 2, the controller 6 limits the actual circulation flow rate such that the actual circulation flow rate does not exceed a set upper limit flow rate. When the actual circulation flow rate is extremely high, erosion may occur in a channel of at least one of the first passage 9, the second passage 10, the first heat exchanger 13, and the indoor-heating terminal 20 that are components forming the circulation circuit. The "upper limit flow rate" is a value set as the flow rate that prevents the occurrence of the erosion. The controller 6 stores the value of the upper limit flow rate.

Fig. 3 is a flowchart showing a procedure executed by the controller 6 in Embodiment 2. The flowchart in Fig. 3 is identical to the flowchart in Fig. 2 except that Step S5, Step S6, and Step S7 are added between Step S2 and Step S4.

In Step S2 in Fig. 3, the controller 6 calculates the "temporary circulation flow rate". The value of the temporary circulation flow rate is the value larger than the target circulation flow rate. For example, the value of the temporary circulation flow rate is the value obtained by adding a predetermined value to the target circulation flow rate. The procedure proceeds to Step S5 from Step S2. In Step S5, the controller 6 determines whether or not the value of the temporary circulation flow rate is not larger than the value of the upper limit flow rate. In the case where the value of the temporary circulation flow rate is not larger than the value of the upper limit flow rate, the procedure proceeds to Step S6 from Step S5. In Step S6, the controller 6 controls the operation of the pump 2 such that the actual circulation flow rate detected by the flow rate sensor 3 is equal to the temporary circulation flow rate.

In contrast to this, in the case where the value of the temporary circulation flow rate is larger than the value of the upper limit flow rate, the procedure proceeds to Step S7 from Step S5. In Step S7, the controller 6 controls the operation of the pump 2 such that the actual circulation flow rate detected by the flow rate sensor 3 is equal to the upper limit flow rate. The procedure proceeds to Step S4 from Step S6 or Step S7. The process in Step S4 is the same as that in Embodiment 1.

According to the present Embodiment 2, in addition to the same effects as those in Embodiment 1, the following effect is obtained. It is possible to prevent the occurrence of the erosion in the channel of the component forming the circulation circuit more reliably.

In each of Embodiments 1 and 2 described above, the example in which the heating means that heats the heat medium includes the heat pump device 11 has been described. The heating means in the present invention is not limited to the heating means that includes the heat pump device 11. The heating means in the present invention may include a combustion heating device or a boiler that performs heating by using heat of combustion of fuel such as gas, kerosene, heavy oil, or coal. The heating means in the present invention may include an electric heater. The heating means in the present invention may include a heating device that heats the heat medium using solar heat. The heating means in the present invention may be configured by combining a plurality of heating devices.

[Reference Signs List]

1 heat medium circulation system
2 pump
3 flow rate sensor
4 outlet temperature sensor
5 return temperature sensor
6 controller
9 first passage
10 second passage
11 heat pump device
12 compressor
13 first heat exchanger
14 decompression device
15 second heat exchanger
16 blower
20 indoor-heating terminal
100 room

**Claims**

1. A heat medium circulation system (1) comprising:

   heating means (11) configured to heat a heat medium;
   a pump (2) configured to circulate the heat medium in a circulation circuit (9, 10, 11, 20) passing through an indoor-heating terminal (20) and the heating means (11);
   load detection means (3, 4, 5) configured to detect an indoor-heating load during an indoor-heating operation in which the heat medium heated by the heating means (11) is supplied to the indoor-heating terminal (20); and
   control means (6) configured to adjust a heating power of the heating means (11) and a circulation flow rate, the circulation flow rate being a flow rate of the heat medium passing through the heating means (11),
   **characterized in that** the control means (6) is configured to adjust, in a case where the indoor-heating load detected when the circulation flow rate is equal to a first flow rate is lower than a minimum load that is a load balanced with a minimum heating power of the heating means (11), the circulation flow rate such that the circulation flow rate is higher than the first flow rate,
   wherein the heat medium circulation system (1) further comprises means (7) configured to make a value of the minimum load stored in the control means (6) variable.

2. The heat medium circulation system (1) according to Claim 1, wherein
   the control means (6) is configured to limit the circulation flow rate such that the circulation flow rate does not exceed a set upper limit flow rate.

3. The heat medium circulation system (1) according to Claim 1 or 2, wherein
   the control means (6) is configured to adjust the circulation flow rate such that the circulation flow rate is caused to return to the first flow rate when a set time has elapsed from when the circulation flow rate becomes higher than the first flow rate.

4. The heat medium circulation system (1) according to Claim 3, further comprising:

   means (7) configured to allow a user to make the set time variable.

5. The heat medium circulation system (1) according to any one of Claims 1 to 4, wherein

   the heating means (11) includes a heat pump (2) device having a compressor (12) configured to compress a refrigerant, and
   the minimum heating power corresponds to the heating power of the heating means (11) when an operating frequency of the compressor (12) is a minimum frequency.

6. The heat medium circulation system (1) according to any one of Claims 1 to 5, further comprising:
   means (7) configured to notify a user that the circulation flow rate is higher than the first flow rate when the circulation flow rate is higher than the first flow rate.

7. The heat medium circulation system (1) according to any one of Claims 1 to 6, further comprising:

   means (7) configured to detect an indoor temperature of a room (100) in which the indoor-heating terminal (20) is installed, wherein
   the control means (6) is configured to stop an operation of the heating means (11) in a case where the indoor-heating load detected when the circulation flow rate is equal to the first flow rate is lower than the minimum load, and the detected indoor temperature is not less than a target indoor temperature.

8. The heat medium circulation system (1) according to any one of Claims 1 to 7, wherein
   the load detection means (3, 4, 5) is configured to detect the indoor-heating load based on a temperature of the heat medium supplied from the heating means (11) to the indoor-heating terminal (20), a temperature of the heat medium returning from the indoor-heating terminal (20) to the heating means (11), and the flow rate of the heat medium.

**9.** The heat medium circulation system (1) according to any one of Claims 1 to 8, further comprising:

> means (4) configured to detect an outlet temperature, the outlet temperature being a temperature of the heat medium flowing out from the heating means (11), wherein
> the control means (6) is configured to adjust, in the indoor-heating operation, the heating power of the heating means (11) such that the detected outlet temperature is equal to a target outlet temperature.

**Patentansprüche**

**1.** Wärmemedium-Zirkulationssystem (1), das aufweist:

> Erwärmungsmittel (11), die zum Erwärmen eines Wärmemediums eingerichtet sind;
> eine Pumpe (2), die zum Zirkulieren des Wärmemediums in einem Zirkulationskreislauf (9, 10, 11, 12, 20) eingerichtet ist, der durch einen Innenerwärmungsanschluss (20) und die Erwärmungsmittel (11) verläuft;
> Lasterfassungsmittel (3, 4, 5), die zum Erfassen einer Innenerwärmungslast während eines Innenerwärmungsbetriebs eingerichtet sind, in welchem das Erwärmungsmedium, das durch die Erwärmungsmittel (11) erwärmt wird, an den Innenerwärmungsanschluss (20) gespeist wird; und
> Steuermittel (6), die zum Anpassen einer Erwärmungsleistung der Erwärmungsmittel (11) und einer Zirkulationsströmungsrate eingerichtet sind, wobei die Zirkulationsströmungsrate eine Strömungsrate des Wärmemediums ist, das durch die Erwärmungsmittel (11) läuft, **dadurch gekennzeichnet, dass** die Steuermittel (6) eingerichtet sind, in einem Fall, wo die Innenerwärmungslast, die erfasst wird, wenn die Zirkulationsströmungsrate gleich einer ersten Strömungsrate ist, kleiner als eine Minimallast ist, die eine Last ist, die mit einer Minimalerwärmungsleistung der Erwärmungsmittel (11) ausgeglichen ist, die Zirkulationsströmungsrate derart einzustellen, dass die Zirkulationsströmungsrate größer als die erste Strömungsrate ist,
> wobei das Wärmemedium-Zirkulationssystem (1) ferner Mittel (7) aufweist, die eingerichtet sind, einen Wert der Minimallast, der in den Steuerungsmitteln (6) gespeichert ist, variabel zu machen.

**2.** Wärmemedium-Zirkulationssystem (1) nach Anspruch 1, wobei

die Steuerungsmittel (6) eingerichtet sind, die Zirkulationsströmungsrate derart zu begrenzen, dass die Zirkulationsströmungsrate eine eingestellte obere Grenzströmungsrate nicht übersteigt.

**3.** Wärmemedium-Zirkulationssystem (1) nach Anspruch 1 oder 2, wobei

die Steuerungsmittel (6) eingerichtet sind, die Zirkulationsströmungsrate derart einzustellen, dass die Zirkulationsströmungsrate dazu veranlasst wird, zur ersten Strömungsrate zurückzukehren, wenn eine eingestellte Zeit abgelaufen ist, ab der die Zirkulationsströmungsrate größer als die erste Strömungsrate geworden ist.

**4.** Wärmemedium-Zirkulationssystem (1) nach Anspruch 3, das ferner aufweist:

Mittel (7), die eingerichtet sind, es einem Nutzer zu ermöglichen, die eingestellte Zeit variabel zu machen.

**5.** Wärmemedium-Zirkulationssystem (1) nach einem der Ansprüche 1 bis 4, wobei

> die Erwärmungsmittel (11) eine Wärmepumpen-(2)-Vorrichtung umfassen, die einen Kompressor (12) aufweist, der zum Komprimieren eines Kühlmittels eingerichtet ist, und
> die Minimalerwärmungsleistung der Erwärmungsleistung der Erwärmungsmittel (11) entspricht, wenn eine Betriebsfrequenz des Kompressors (12) eine minimale Frequenz ist.

**6.** Wärmemedium-Zirkulationssystem (1) nach einem der Ansprüche 1 bis 5, das ferner aufweist:

Mittel (7), die eingerichtet sind, einem Nutzer mitzuteilen, dass die Zirkulationsströmungsrate größer als die erste Strömungsrate ist, wenn die Zirkulationsströmungsrate größer als die erste Strömungsrate ist.

**7.** Wärmemedium-Zirkulationssystem (1) nach einem der Ansprüche 1 bis 6, das ferner aufweist:

> Mittel (7), die eingerichtet sind, eine Innentemperatur eines Raums (100) zu erfassen, in welchem der Innenerwärmungsanschluss (20) installiert ist, wobei
> die Steuermittel (6) eingerichtet sind, einen Betrieb der Erwärmungsmittel (11) in einem Fall zu stoppen, wo die Innenerwärmungslast, die erfasst wird, wenn die Zirkulationsströmungsrate gleich der ersten Strömungsrate ist, kleiner als die minimale Last ist und die erfasste Innentemperatur nicht kleiner als eine Zielinnentemperatur ist.

**8.** Wärmemedium-Zirkulationssystem (1) nach einem der Ansprüche 1 bis 7, wobei
die Lasterfassungsmittel (3, 4, 5) eingerichtet sind, die Innenerwärmungslast zu erfassen basierend auf einer Temperatur des Wärmemediums, das von den Erwärmungsmitteln (11) an den Innenerwärmungsanschluss (20) geliefert wird, auf einer Temperatur des Wärmemediums, das von dem Innenerwärmungsanschluss (20) zu den Erwärmungsmitteln (11) zurückkehrt und auf der Strömungsrate des Wärmemediums.

9. Wärmemedium-Zirkulationssystem (1) nach einem der Ansprüche 1 bis 8, das ferner aufweist:

Mittel (4), die eingerichtet sind, eine Auslasstemperatur zu erfassen, wobei die Auslasstemperatur eine Temperatur des Wärmemediums ist, das aus den Erwärmungsmitteln (11) ausströmt, wobei
die Steuermittel (6) eingerichtet sind, im Innenerwärmungsbetrieb die Erwärmungsleistung der Erwärmungsmittel (11) derart einzustellen, dass die erfasste Auslasstemperatur gleich einer Zielauslasstemperatur ist.

**Revendications**

1. Circulateur de fluide caloporteur (1) comprenant :

un moyen de chauffage (11) conçu pour chauffer un fluide caloporteur ;
une pompe (2) conçue pour faire circuler le fluide caloporteur dans un circuit de circulation (9, 10, 11, 20) passant par un terminal de chauffage d'intérieur (20) et le moyen de chauffage (11) ;
un moyen de détection de charge (3, 4, 5) conçu pour détecter une charge de chauffage d'intérieur pendant une opération de chauffage d'intérieur durant laquelle le fluide caloporteur chauffé par le moyen de chauffage (11) est fourni au terminal de chauffage d'intérieur (20) ; et
un moyen de commande (6) conçu pour ajuster une puissance de chauffage du moyen de chauffage (11) et un débit de circulation, le débit de circulation étant un débit du fluide caloporteur passant par le moyen de chauffage (11),
**caractérisé en ce que** le moyen de commande (6) est conçu pour ajuster, dans un cas dans lequel la charge de chauffage d'intérieur détectée lorsque le débit de circulation est égal à un premier débit est inférieure à une charge minimale qui est une charge équilibrée avec une puissance de chauffage minimale du moyen de chauffage (11), le débit de circulation de telle sorte que le débit de circulation soit supérieur au premier débit,
le circulateur de fluide caloporteur (1) comprenant, en outre, un moyen (7) conçu pour rendre une valeur de la charge minimale enregistrée dans le moyen de commande (6) variable.

2. Circulateur de fluide caloporteur (1) selon la revendication 1, dans lequel
le moyen de commande (6) est conçu pour limiter le débit de circulation de telle sorte que le débit de circulation ne dépasse pas une limite supérieure de débit définie.

3. Circulateur de fluide caloporteur (1) selon la revendication 1 ou 2, dans lequel
le moyen de commande (6) est conçu pour ajuster le débit de circulation de telle sorte que le débit de circulation soit ramené au premier débit lorsqu'un temps défini s'est écoulé à partir du moment où le débit de circulation devient supérieur au premier débit.

4. Circulateur de fluide caloporteur (1) selon la revendication 3, comprenant, en outre :
un moyen (7) conçu pour permettre à un utilisateur de rendre le temps défini variable.

5. Circulateur de fluide caloporteur (1) selon l'une quelconque des revendications 1 à 4, dans lequel

le moyen de chauffage (11) comprend un dispositif de pompe à chaleur (2) comportant un compresseur (12) conçu pour comprimer un fluide frigorigène, et
la puissance de chauffage minimale correspond à la puissance de chauffage du moyen de chauffage (11) lorsqu'une fréquence de fonctionnement du compresseur (12) est une fréquence minimale.

6. Circulateur de fluide caloporteur (1) selon l'une quelconque des revendications 1 à 5, comprenant, en outre :
un moyen (7) conçu pour informer un utilisateur que le débit de circulation est supérieur au premier débit lorsque le débit de circulation est supérieur au premier débit.

7. Circulateur de fluide caloporteur (1) selon l'une quelconque des revendications 1 à 6, comprenant, en outre :

un moyen (7) conçu pour détecter une température d'intérieur d'une pièce (100) dans laquelle est installé le terminal de chauffage d'intérieur (20), dans lequel
le moyen de commande (6) est conçu pour arrêter le moyen de chauffage (11) dans un cas dans lequel la charge de chauffage d'intérieur détectée lorsque le débit de circulation est égal au premier débit est inférieure à la charge minimale, et la température d'intérieur détectée n'est pas inférieure à une température d'intérieur cible.

8. Circulateur de fluide caloporteur (1) selon l'une quelconque des revendications 1 à 7, dans lequel
le moyen de détection de charge (3, 4, 5) est conçu pour détecter la charge de chauffage d'intérieur à partir d'une température du fluide caloporteur fourni par le moyen de chauffage (11) au terminal de chauffage d'intérieur (20), d'une température du fluide caloporteur retournant du terminal de chauffage d'intérieur (20) au moyen de chauffage (11), et du débit du fluide caloporteur.

9. Circulateur de fluide caloporteur (1) selon l'une quelconque des revendications 1 à 8, comprenant, en outre :

un moyen (4) conçu pour détecter une température de sortie, la température de sortie étant une température du fluide caloporteur s'écoulant en sortie du moyen de chauffage (11), dans lequel
le moyen de commande (6) est conçu pour ajuster, pendant l'opération de chauffage d'intérieur, la puissance de chauffage du moyen de chauffage (11) de telle sorte que la température de sortie détectée soit égale à une température de sortie cible.

FIG. 1

*FIG. 2*

```
                    ┌─────────┐
                    │  START  │
                    └────┬────┘
                         │            S1
                         ▼
                  ╱──────────────╲              NO
                 ╱  INDOOR-HEATING ╲ ─────────────────────────┐
                 ╲  LOAD≦MINIMUM   ╱                          │
                  ╲    LOAD?      ╱                           │
                   ╲─────┬───────╱                            │
                      YES │          S2                  S3   │
                         ▼                                    ▼
          ┌──────────────────────────┐      ┌──────────────────────────┐
          │ TEMPORARY CIRCULATION    │      │ ACTUAL CIRCULATION        │
          │ FLOW RATE = TARGET       │      │ FLOW RATE = TARGET        │
          │ CIRCULATION FLOW RATE    │      │ CIRCULATION FLOW RATE     │
          │ + PREDETERMINED VALUE    │      └──────────────────────────┘
          └───────────┬──────────────┘                       │
                      │        ◄──────────┐                  │
                      ▼            S4      │                  │
               ╱──────────────╲     NO     │                 │
              ╱   HAS SET       ╲──────────┘                 │
              ╲  TIME ELAPSED?  ╱                            │
               ╲──────┬────────╱                             │
                  YES │                                      │
                      ▼          ◄───────────────────────────┘
                 ┌─────────┐
                 │   END   │
                 └─────────┘
```

*FIG. 3*

```
                    ┌─────────┐
                    │  START  │
                    └────┬────┘
                         │
                         ▼              S1
                    ◇─────────────◇        NO
                   ╱ INDOOR-HEATING ╲──────────────────────────┐
                  ◇  LOAD≦MINIMUM    ◇                          │
                   ╲     LOAD?      ╱                           │
                    ◇─────┬───────◇                            │
                          │ YES        S2                       │            S3
             ┌────────────▼──────────────┐        ┌─────────────▼─────────────┐
             │ TEMPORARY CIRCULATION     │        │ ACTUAL CIRCULATION        │
             │ FLOW RATE = TARGET        │        │ FLOW RATE = TARGET        │
             │ CIRCULATION FLOW RATE     │        │ CIRCULATION FLOW RATE     │
             │ + PREDETERMINED VALUE     │        └─────────────┬─────────────┘
             └────────────┬──────────────┘                      │
                          │            S5                        │
                     ◇────▼─────────◇       NO                   │
                    ╱   TEMPORARY    ╲                           │
                   ◇ CIRCULATION FLOW ◇───────┐                  │
                    ╲ RATE≦UPPER LIMIT╱       │                  │
                     ◇  FLOW RATE   ◇         │                  │
                      ◇     ?    ◇            │                  │
                       ◇───┬───◇              │                  │
                          │ YES     S6        │                  │
             ┌────────────▼──────────────┐    │                  │
             │ ACTUAL CIRCULATION        │    │                  │
             │ FLOW RATE = TEMPORARY     │    │        S7        │
             │ CIRCULATION FLOW RATE     │    │                  │
             └────────────┬──────────────┘    │                  │
                          │         ┌─────────▼──────────────┐   │
                          │         │ ACTUAL CIRCULATION     │   │
                          │         │ FLOW RATE = UPPER      │   │
                          │         │ LIMIT FLOW RATE        │   │
                          │         └─────────┬──────────────┘   │
                          ◄──────────────────┘                   │
                          │            S4                         │
                     ◇────▼─────────◇        NO                   │
                    ╱   HAS SET      ╲───────────────────────────┘
                   ◇ TIME ELAPSED?    ◇
                    ╲               ╱
                     ◇─────┬──────◇
                          │ YES
                          ▼
                    ┌─────────┐
                    │   END   │
                    └─────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016114294 A
- EP 2770398 A2
- EP 2492602 A1